## Europäisches Patentamt

## European Patent Office

## Office européen des brevets

(19)

(11) Veröffentlichungsnummer: **0 233 302**
**B1**

---

(12) # EUROPÄISCHE PATENTSCHRIFT

(45) Veröffentlichungstag der Patentschrift:
**08.08.90**

(51) Int. Cl.⁵: **F16L 39/02**, G01L 19/00

(21) Anmeldenummer: **86101980.0**

(22) Anmeldetag: **17.02.86**

---

(54) **Fluidisches System mit Messvorrichtung.**

---

(43) Veröffentlichungstag der Anmeldung:
**26.08.87 Patentblatt 87/35**

(45) Bekanntmachung des Hinweises auf die Patenterteilung:
**08.08.90 Patentblatt 90/32**

(84) Benannte Vertragsstaaten:
**AT BE CH DE FR GB IT LI NL SE**

(56) Entgegenhaltungen:
**DE-A- 2 537 407**
**US-A- 4 108 008**

(73) Patentinhaber: **Hydrotechnik GmbH, Holzheimer Strasse 94-96, D-6250 Limburg 1(DE)**

(72) Erfinder: **Hofmann, Manfred, Lahnblick 28, D-6251 Altendiez(DE)**

(74) Vertreter: **Linser, Heinz et al, Patentanwälte Heinz Linser Dipl. Ing. Eckhardt Eyer Robert-Bosch-Strasse 12a Postfach 10 22 10, D-6072 Dreieich(DE)**

---

ACTORUM AG

## Beschreibung

Die Erfindung betrifft eine Vielfach-Meßvorrichtung zur gleichzeitigen Erfassung und Messung von verschiedensten Drücken fluidischer Systeme mit einer unter Betriebsdruck von Hand betätigbaren Mehrfachschnellkupplung mit Stecker- und Dosenstück, wobei eines der Stücke als Meßvorrichtung mit einer Vielzahl von Sensoren ausgebildet ist, das einerseits mit Meß-, Steuer- und Regelleitungen verbindbar ist und welches andererseits mit Meß-, Steuer- und Regelpunkten des fluidischen Systems verbunden ist, und wobei das Dosen- als auch das Steckerstück ein Gehäuse mit mehreren achsparallelen Bohrungen aufweist und federbelastete und mechanische betätigbare Rückschlagventile vorgesehen sind, deren Ventilkörper mit der Außenkante und/oder Stirnfläche ihrer Dichtschultern im geschlossenen Ventilzustand einen Strömungskanal abdichten.

Zur Erfassung von Arbeitsdrücken der fluidischen Medien ist beispielsweise eine Meßkupplung für fluidische Systeme bekannt, welche aus einer im eingebauten Zustand unter Leitungsdruck stehenden Kupplungsbuchse besteht, in deren Bohrung ein federbelastetes und mechanisch betätigbares Rückschlagventil angeordnet ist.

Meßkupplungen dieser Art dienen zum Beispiel zur Herstellung von Prüf- oder Meßanschlüssen an Druckleitungen, wobei in der Regel die Kupplungsbuchse mit ihrem Einschraubgewinde fest an der Druckleitung eines fluidischen Systems installiert ist. Für die Dauer der Prüf- oder Meßarbeiten wird auf diese Kupplungsbuchse ein als Hohlzapfen ausgebildeter Dichtnippel mittels Überwurfmutter aufgeschraubt, der fest mit einem Schlauch verbunden ist. Die Kupplungen können beispielsweise unter Druck, d.h. ohne die Anlage stillzusetzen, über Meßschläuche mit den entsprechenden Meßgeräten verbunden werden. Bei Anschluß fest installierter Geräte, zum Beispiel Manometer, Manometer-Wahlschalter, elektrische Druckgeber und Druckschalter, können die flexiblen Meßschläuche wie Elektrokabel verlegt werden, so daß eine aufwendige Rohrverlegung entfällt. Mit solchen Meßkupplungen lassen sich daher die effektiven Arbeitsdrücke direkt in der Fluidleitung messen, wobei kein Lösen von Entlüftungsschrauben und Rohrverschraubungen erforderlich ist. Solche Kupplungen finden bei den verschiedensten Bauelemente und Regelungen von Fluid-Systemen Verwendung. Nach dem Trennen des Kupplungsanschlusses wird auf die Kupplungsbuchse mit Außengewinde eine Schutzkappe aufgeschraubt, die den Zweck hat, das Eindringen von Schmutz in die Kupplungsbuchse zu verhindern und welche darüberhinaus eine zusätzliche Abdichtfunktion übernimmt, für den Fall, daß ein in die Kupplungsbuchse installiertes Rückschlagventil nicht absolut dicht schließt.

Ventilkupplungen der genannten Art gehen beispielsweise aus der DE-PS 2 756 084 hervor, wobei die Ventilkörper als Kegel oder Kugel ausgebildet sind. Bei dieser bekannten Ventilkupplung ist der Ventilkörper als Rückschlagventil auf einer Druckfeder federbeweglich angeordnet und weist an einem oberen Kontaktende einen Strömungskanal auf. Die Ventilkupplung ist dabei mit einem Dicht- und Verdrehsicherungsring versehen, dessen Dichtfunktion jedoch nur dann gewährleistet ist, wenn eine entsprechende Schlauch- oder Verschlußkappe mit ihrem Dichtnippel fest auf die Kupplungsbuchse aufgeschraubt ist.

Sobald diese Kappe gelöst ist, bzw. falls eine solche Kappe überhaupt nicht vorhanden ist – wie zum Beispiel bei Manometerwahlschaltern –, erfolgt die Abdichtung des Druckmediums nur noch durch das entsprechende Rückschlagventil. Ein Rückschlagventil für solche Hochdruck-Ventilkupplungen zeigt jedoch konstruktionsbedingt je nach Viskosität des Druckmediums eine mehr oder weniger stark ausgeprägte Undichtheit bzw. ist unter Serienbedingungen jedenfalls nicht als praktisch dichte Ausführung darstellbar.

Für Verschlauchungen in der allgemeinen Hydraulik und für Gasfülleinrichtungen von Hydraulikspeichern ist eine derartige Ausbildung ausreichend, doch ergeben sich schon dann Reklamationen wegen Undichtheit, wenn zum Beispiel bei mehreren Ventilkupplungen gleichzeitig die Kappen gelöst werden, um mit einer Meßeinrichtung nacheinander mehrere Meßstellen zu prüfen, wenn bei Hydraulikspeichern Gasdruck-Prüfeinrichtungen ohne Nachfüllmöglichkeit benutzt werden, oder wenn die Ventilkupplungen zur Überwachung von Anlagen mit brennbaren Gasen etc. eingesetzt sind.

Zur Anwendung in Manometer-Wahlschaltern ist der Einsatz solcher Ventilkupplungen wegen ständiger Leckage an den jeweils nicht benutzten Anschlüssen überhaupt nicht möglich. Es ist bei den genannten Ventilkupplungen auch schon versucht worden, das Rückschlagventil mit gummielastischen Dichtungen bzw. üblichen O-Ringen auszustatten, jedoch konnte hierdurch trotz anfänglicher, genügender Dichtheit nicht in allen Fällen ein positives Ergebnis erzielt werden. Bei langen Meßleitungen und großen Totvolumina in Manometern oder in dem angeschlossenen Kreislauf und insbesondere bei niedrigviskosen Flüssigkeiten oder höheren Betriebsdrücken bzw. bei Prüfeinrichtungen für Hydrospeicher erfolgt ein Auswaschen der gummielastischen Dichtung, da eine hohe Druckdifferenz beim Abheben des Ventils eine sehr starke Strömung des verwendeten Mediums an der Dichtung bewirkt.

Aus diesen Gründen wurde bereits eine Ventilkupplung, vorzugsweise eine Ventil-Meßkupplung vorgeschlagen, welche für fluidische Systeme mit hohen Arbeitsdrücken und Medien unterschiedlichster Viskosität geeignet ist. Hierbei wurden Maßnahmen vorgeschlagen, die aus einem elastomeren Werkstoff bestehende Dichtung gegen Kavitation und Auswaschungen zu schützen und die Wirkung von großen Volumina in Meßleitungen oder dergleichen des angeschlossenen Kreislaufs auf die elastomere Dichtung auszuschalten, indem bei einer Ventilkupplung ein zylindrischer Ventilkörper, welcher mit der Außenkante und/oder Stirnfläche seiner Dichtschulter im geschlossenen Ventilzustand gegen eine aus elastomerem Werkstoff bestehenden Dichtring preßt, mit der Kupplungsbuchse bzw. einer in der Kupplungsbuchse angeordnete Dichtbuchse einen abdichtbaren Strömungskanal bildet, wobei stromabwärts und/oder stromaufwärts zum Dichtring weitere Dichtungen angeordnet sind, welche bei Aufstoßen des Ventilkörpers ihre Dichtfunktion erst nach dem Abheben des Dichtringes von der Dichtschulter vorzugsweise verzögert beenden. Durch diese Maßnahme wird sichergestellt, daß die aufgrund der hohen Druckdifferenz entstehende Strömung unmittelbar nach dem Ablösen des elastomeren Dichtringes von seiner Ventilschulter gedrosselt oder nahezu zum Stillstand gebracht wird.

Die Abnahme der Dichtfunktion der stromabwärts und/oder stromaufwärts zum Dichtring angeordneten Dichtungen während des Aufstoßvorganges des Ventilkörpers verläuft im Vergleich zur Abnahme der Dichtfunktion des Dichtringes über einen längeren Hubweg. Auf diese Weise üben die stromabwärts und/oder stromaufwärts zum Dichtring angeordneten Dichtungen noch ihre Dichtfunktion aus, während aufgrund des kürzeren Hubweges des Dichtringes dieser der nachteiligen Wirkung einer sonst entstehenden Strömung und einer sich dadurch ausgebildeten Kavitation oder Auswaschung entzogen ist.

Der Einsatz von Hydraulikanlagen im Verbund mit anderen Systemkomponenten und von elektrohydraulischen Elementen erfordert bei Ausfall oder mangelhafter Funktion eine möglichst schnelle und genaue Diagnose, so daß der Zustand bestimmter Baugruppen unmittelbar erkannt werden kann. Hierzu sind Druckmeßdaten möglichst vieler Komponenten des Systems in kurzer Zeit, vorzugsweise gleichzeitig erforderlich. Hierzu eignen sich die eingangs beschriebenen Meßkupplungen besonders. Diese werden an den strategisch wichtigen Meßkupplungen einer Anlage verlegt und ggf. auf einer Blende mittels Meßleitungen zusammengefaßt. Werden nunmehr die Messungen durchgeführt, so müssen die Hochdruckschläuche einzeln mit den Monomeßpunkten verbunden werden. Verwechslungen der Anschlüße beim Anschließen sind oftmals die Foge, so daß Falschmessungen durchgeführt werden. Darüberhinaus können aber auch angeschlossene Meßgeräte beschädigt oder zerstört werden, wenn die eingehenden Meßwerte nicht mit den Meßbereichen des Gerätes übereinstimmen.

Es sind ferner Mehrfachkupplungen bekannt, welche sich jedoch nur bei geringen Systemdrücken von Hand betätigen lassen. Bei Systemen mit hohen Drücken läßt sich der Kupplungsvorgang nur maschinell durchführen oder das System muß vor dem Kupplungsvorgang drucklos geschaltet werden.

Der Erfindung liegt die Aufgabe zugrunde ein fluidisches System in Kombination mit einer Meßvorrichtung anzugeben, bei dem Meß-, Steuerund/oder Regelleitungen mit den entsprechenden Punkten des Systems fest installiert sind und zu einer Sammelvorrichtung führen, wobei die bereits vorgeschlagene Monokupplung verwendet und diese zu einer Vielfachkupplung entwickelt wird, um die erfaßten Drücke über eine Multileitung zu übertragen, so daß die Messungen – aufgenommen an den verschiedensten Punkten des Systems – an zentraler Stelle und – falls erforderlich – auch gleichzeitig durchgeführt werden können.

Die Lösung dieser Aufgabe erfolgt dadurch, daß nach der Erfindung in den Bohrungen der Gehäuse jeweils eine Kupplungsbuchse mit Radialspiel aufgenommen ist, daß in jeder Kupplungsbuchse eines der Rückschlagventile mit zylindrischen Ventilkörpern gegen einen Dichtring preßbar angeordnet ist, daß jedes Rückschlagventil des Steckerstückes einen gefesselten fliegenden Kolben aufweist, dessen Ausgangsnippel zum Aufstoßen des zylindrischen Ventilkörpers des ihm zugeordneten Rückschlagventils des Dosenstückes und dessen Eingangsnippel zum Aufstoßen des Ventilkörpers seines Rückschlagventils des Steckerstückes ausgebildet ist, und daß in jedem Rückschlagventil des Dosen- und des Steckerstückes stromabwärts zum insbesondere aus elastomerem Werkstoff bestehenden Dichtring eine weitere Strömungskanal-Dichtung angeordnet ist, welche beim Aufstoßen des zylindrischen Ventilkörpers durch den Eingangs- oder Ausgangsnippel des jeweiligen fliegenden Kolbens beim Kuppelvorgang ihre Dichtfunktion erst nach dem Abheben des Dichtringes von der Dichtschulter verzögert beendet.

In Weiterbildung der Erfindung weist die Meßvorrichtung ein mit einer Vielzahl von Bohrungen versehenes Gehäuse zur Aufnahme jeweils eines Drucksensorgehäuses auf, wobei jede Bohrung mit einem Fluid-Kanal und einem Entlüftungskanal verbunden ist und der Fluid-Kanal zu einer Kupplungsbuchse des Dosen- oder Steckerstückes führt.

Nach der Erfindung bildet jeder Drucksensor mit dem Gehäuse eine abgedichtete Drucksensorkammer kleinen Volumens.

Die Drucksensorkammer weist in vorteilhafter Weise eine Entlüftungsvorrichtung auf, welche eine Entlüftungsschraube besitzt, die am Ausgang ihres Entlüftungskanals angeordnet ist, welche mit der Drucksensorkammer des Drucksensors fluidisch in Verbindung steht.

Der Drucksensor weist ferner elektrische Anschlüsse auf, die nach außen zu einer Schaltleiste führen.

Die Lösung der weiteren Aufgabe erfolgt mit Hilfe einer Mehrfachschnellkupplung dadurch, daß nach der Erfindung sowohl das Stecker- als auch das Dosenstück ein Gehäuse mit mehreren achsparallelen Bohrungen zur Aufnahme jeweils einer Kupplungsbuchse mit Radialspiel aufweisen und in jeder Kupplungsbuchse ein federbelastetes und mechanisch betätigbares Rückschlagventil mit einem zylindrischen Ventilkörper angeordnet ist, welcher mit der Außenkante und/oder Stirnfläche seiner Dichtschulter im geschlossenen Ventilzustand gegen einen Dichtring preßt, der mit der Kupplungsbuchse bzw. einer in der Kupplungsbuchse angeordneten Dichtbuchse einen abdichtbaren Strömungskanal bildet, und jedes Rückschlagventil des Steckerstückes einen gefesselten und mit einer Durchbohrung versehenen fliegenden Kolben aufweist, dessen Ausgangsnippel zum Aufstoßen des zylindrischen Ventilkörpers des ihm zugeordneten mechanisch betätigbaren Rückschlagventils des Dosenstückes und dessen Eingangsnippel zum Aufstoßen des Ventilkörpers seines Rückschlagventils des Steckerstückes ausgebildet ist.

In Weiterbildung der Erfindung weist der fliegende Kolben einen äußeren Anschlagbund zur Begrenzung seiner Eindringtiefe in das ihm zugeordnete Ventil des Dosenstückes und einen inneren Anschlagbund zur Begrenzung der Eindringtiefe in das ihm nachgeordnete Ventil auf, wobei jede Bohrung im Gehäuse des Steckerstückes ausgangsseitig mit einer Hinterdrehung zur Begrenzung der Achsialbewegung des fliegenden Kolbens versehen ist.

In jedem Rückschlagventil des Dosen- und des Steckerstückes sind stromabwärts und/oder stromaufwärts zum aus elastomerem Werkstoff bestehenden Dichtring weitere Strömungskanal-Dichtungen angeordnet, welche beim Aufstoßen des Ventilkörpers durch den Eingangs- oder Ausgangsnippel des jeweiligen fliegenden Kolbens beim Kuppelvorgang ihre Dichtfunktion erst nach dem Abheben des Dichtringes von der Dichtschulter vorzugsweise verzögert beenden.

In vorteilhafter Weise weist jede Kupplungsbuchse an ihrer Ausgangsseite einen Sprengring auf, welcher gegen einen Bund eines Schlauchnippels anliegt und von einer ein- oder mehrteiligen, durch Verschraubungen verspannten Lochscheibe gehalten ist.

Das Gehäuse des Dosenstückes und ihre Lochscheibe weisen eine zentrale Bohrung auf, in der ein Zentrierstift zur Zentrierung der Lochscheibe angeordnet ist.

Die Lochscheibe des Steckerstückes weist eine zentrale Gewindebohrung auf, in der sich ein Spannbolzen zur Verspannung der Lochscheibe befindet und welcher mit einem aus dem Gehäuse des Steckerstückes reichenden Einfädel- und Zentrierstift versehen ist.

Die Frontseiten der Gehäuse des Dosen- und des Steckerstückes weisen radial wirkende Kodierstifte auf, welche beim Kuppelvorgang in definierte Kodierbohrungen eingreifen.

In vorteilhafter Weise ragt der Zentrierstift länger als die Kodierstifte aus dem Gehäuse des Steckerstückes.

Die Erfindung wird anhand der Figuren näher erläutert. Hierbei zeigen:

FIGUR 1 das Schaltbild einer Fluid-Anlage mit Fluid-Leitungen, zusammengeführt zu einer Sammelvorrichtung mit einer Meßvorrichtung;

FIGUR 2 einen Längsschnitt durch ein Steckerstück mit integral verbundener Meßvorrichtung und ein mit dem Steckerstück gekuppeltes Dosenstück;

FIGUR 3 eine vergrößerte Darstellung eines in der Figur 1 mit X bezeichneten Ausschnittes,

FIGUR 4 einen Schnitt C–D nach Figur 2, und

FIGUR 5 einen Schnitt E–F nach Figur 2.

In den verschiedenen Zeichnungen bzw. Abbildungen sind gleiche Elemente mit gleichen Bezugszeichen versehen, während gleichartige Elemente mit gleicher Bezifferung und mit Indizes bezeichnet sind.

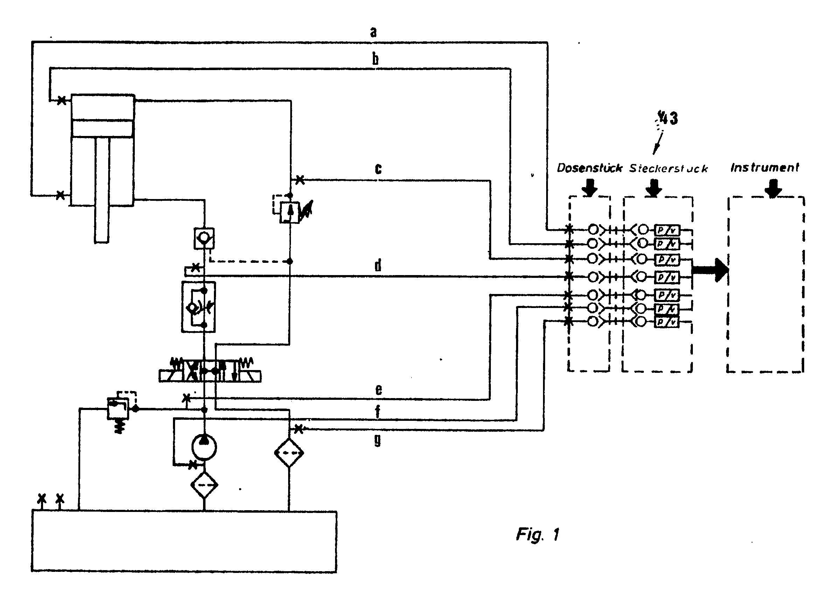

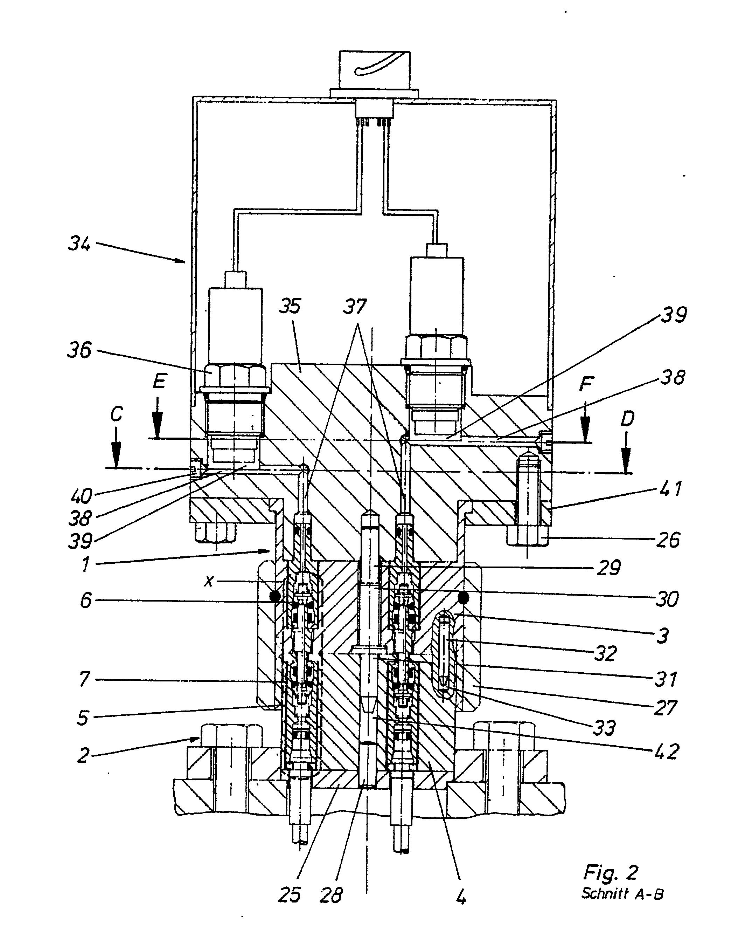

In der Figur 1 ist das Schaltbild einer Fluid-Anlage mit Fluid-Leitungen als ein Anwendungsbeispiel der Erfindung dargestellt. In diesem Falle handelt es sich um eine Leckageprüfeinrichtung mit Prüfzylindern und weiteren zu überwachenden und zu prüfenden Elementen. Die Fluid-Leitungen a, b, c, d, e, f und g sind mit den jeweiligen Elementen der Fluid-Anlage verbunden und führen sämtlich zu einer gemeinsamen Sammelvorrichtung 43, welche aus einem Dosen- und einem Steckerstück besteht, welches im folgenden noch näher beschrieben wird. Eine Gruppe von Verbindungsleitungen des Steckerstückes ist direkt mit einer Meßvorrichtung integral verbunden, während eine andere Gruppe von Fluidverbindungsleitungen oder elektrischen Leitern aus der Meßvorrichtung zu einem entfernt gelegenen Meß-, Steuer- oder Regelgerät geführt ist. Die Sammelvorrichtung mit der Mehrfachschnellkupplung und dem integrierten Meßgerät ermöglicht alle angesprochenen Variationen. Als Fluid-Anlage kommt jede Anlage in Frage, welche beispielsweise mit einer Hydraulik ausgerüstet ist. Es können mobile oder stationäre Anlagen sein. Zu den mobilen Anlagen zählen Erdbewegungsanlagen wie Bagger, Rammvorrichtungen, ferner Transportfahrzeuge auf Rädern oder Ketten, Hebefahrzeuge oder dergleichen.

Das fluidische Mittel kann auch in verschiedenen Stoffen vorliegen, d.h. eine oder eine Gruppe von Leitungen kann ein Hydrauliköl führen, während in einer oder einer Gruppe von Leitungen Preßluft enthalten ist. Die Mehrfachschnellkupplung, welche Bestandteil der Sammelvorrichtung 43 ist, kann gleichzeitig Hochdrücke von mehreren hundert bar oder Unter- und/oder wechselnde Drücke aufweisen.

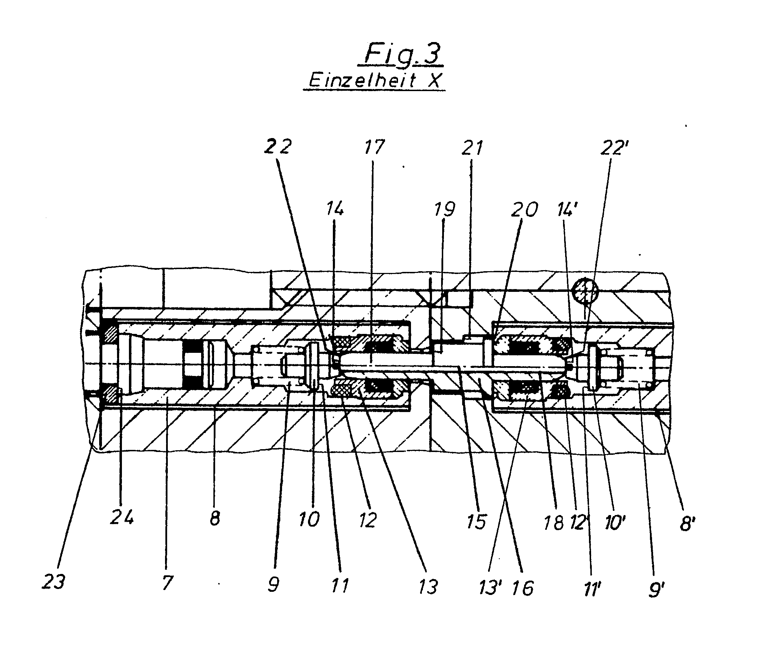

Die Figur 2 zeigt die unter Betriebsdruck betätigbare Mehrfachschnellkupplung, welche mit einem Dosen- und einem Steckerstück 2 bzw. 1 ausgebildet ist. Das weiterführende Stecker- oder Dosenstück 1 bzw. 2 ist mit einer eine Vielzahl von Sensoren aufweisenden Meßvorrichtung 34 verbunden. Entsprechende Verbindungsleitungen können auch zu nicht näher dargestellten weiteren Meß-, Steuer- und/oder Regelvorrichtungen geführt sein.

Die Meßvorrichtung 34 weist ein mit einer Vielzahl von Bohrungen versehenes Gehäuse 35 zur Aufnahme jeweils eines Drucksensors 36 auf. Zur Herstellung der Fluidverbindung ist jede Bohrung mit einem Fluid-Kanal 37 und einem Entlüftungskanal 38 versehen, an dessen Ende sich die Entlüftungsschraube 40 befindet. Der Fluid-Kanal 37 führt zu einer Kupplungsbuchse 7 des Dosen- oder Steckerstückes 2 bzw. 1. Jeder Drucksensor 36 bildet mit dem Gehäuse 35 eine abgedichtete Drucksensorkammer 39 mit einem relativ kleinen Volumen.

Der Drucksensor 36, welcher in an sich bekannter Weise als Halbleiterelement mit integrierter Verstärkerschaltung und gegebenenfalls Temperaturkompensator und Kompensatorschaltung ausgebildet ist, weist elektrische Anschlüsse auf, die außen zu einer nicht näher dargestellten Schaltleiste führen.

Das mit einer Vielzahl von Bohrungen versehene Gehäuse 35 ist gleichzeitig als Steckerstück 1 der Mehrfachschnellkupplung ausgebildet. Das Gehäuse 35 kann jedoch alternativ auch als Dosenstück aufgebaut sein.

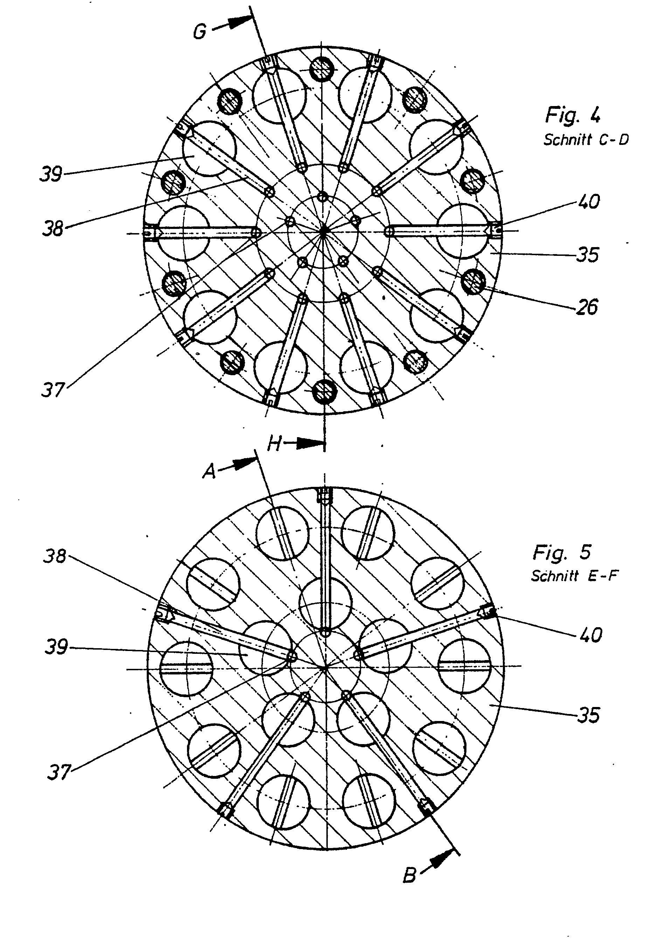

Die Figur 2 zeigt ein Steckerstück 1, welches mit einem Dosenstück 2 gekoppelt ist. Die Figur 3 zeigt einen vergrößerten Ausschnitt X aus Figur 2. Es wird daher gleichzeitig auf die Figur 3 verwiesen.

Der Steckerstück 1 weist ein Gehäuse 3 auf und in entsprechender Weise besitzt auch das Dosenstück 2 ein Gehäuse 4. Beide Gehäuse 3 und 4 sind mit mehreren achsparallelen Bohrungen 5 bzw. 6 zur Aufnahme jeweils einer Kupplungsbuchs 7 bzw. 7' mit einem Radialspiel 8 bzw. 8' versehen. Die Kupplungsbuchse 7' des Steckerstückes 1 sind gleichartig zu den Kupplungsbuchsen 7 des Dosenstückes 2 ausgebildet, so daß vorerst die Beschreibung einer Kupplungsbuchse 7 in dem Dosenstück 2 erfolgt.

In jeder Kupplungsbuchse 7 befindet sich ein federbelastetes und mechanisch betätigbares Rückschlagventil 9 mit einem zylindrischen Ventilkörper 10. Der Ventilkörper 10 preßt mit der Außenkante und/oder Stirnfläche seiner Dichtschulter 11 im geschlossenen Ventilzustand gegen einen Dichtring 12, der mit der Kupplungsbuchse 7 bzw. einer in der Kupplungsbuchse 7 angeordneten Dichtbuchse 13 einen abdichtbaren Strömungskanal 14 bildet.

Die gleichen Elemente befinden sich in den Kupplungsbuchsen 7' der Steckerstücke 1. Jedes mechanisch betätigbare Rückschlagventil 9' des Steckerstückes 1 weist jedoch einen gefesselten und mit einer Durchbohrung 15 versehenen fliegenden Kolben 16 auf, dessen Ausgangsnippel 17 zum Aufstoßen des zylindrichen Ventilkörpers 10 des ihm zugeordneten mechanisch betätigbaren Rückschlagventils 9 des Dosenstückes 2 und dessen Eingangsnippel 18 zum Aufstoßen des zylindrischen Ventilkörpers 10' des mechanisch betätigbaren Rückschlagventils 9' des Steckerstückes 1 dient und dementsprechend ausgebildet ist.

Der fliegende Kolben 16 ist mit einem äußeren Anschlagbund 19 zur Begrenzung seiner Eindringtiefe in das ihm zugeordnete mechanisch betätigbare Rückschlagventil 9 des Dosenstückes 2 versehen.

Ferner weist der fliegende Kolben einen inneren Anschlagbund 20 zur Begrenzung der Eindringtiefe in das ihm nachgeordnete mechanisch betätigbare Rückschlagventil 9' des Steckerstückes 1 auf. Jede Bohrung 5 im Gehäuse des Steckerstückes 1 ist ausgangsseitig mit einer Hinterdrehung 21 zur Begrenzung der Axialbewegung des fliegenden Kolbens 16 versehen.

In jedem mechanisch betätigbaren Rückschlagventil 9 bzw. 9' des Dosen- und des Steckerstückes 2 bzw. 1 ist stromabwärts und/oder stromaufwärts zum Dichtring 12 bzw. 12' eine weitere Strömungskanal-Dichtung 22 bzw. 22' angeordnet, welche beim Aufstoßen des zylindrischen Ventilkörpers 10 bzw. 10' durch den Eingangs- oder Ausgangsnippel 18 bzw. 17 des jeweiligen fliegenden Kolbens 16 beim Kuppelvorgang ihre Dichtfunktion erst nach dem Abheben des Dichtringes 12 bzw. 12' von der Dichtschulter 11 bzw. 11' verzögert beendet.

Jede Kupplungsbuchse 7 ist an ihrer Ausgangsseite mit einem Sprengring 23 versehen, welcher gegen einen Bund 24 des entsprechenden Schlauchnippels anliegt und von einer ein- und mehrteiligen, durch Verschraubungen verspannten Lochscheibe 25 gehalten ist. In entsprechender Weise ist das Gehäuse 35 mit der Lochscheibe 41 mit Hilfe der Bolzen 26 verspannt.

Das Gehäuse 4 des Dosenstückes 2 und seine Lochscheibe 25 sind mit einer zentralen Bohrung 42 versehen, in der der Zentrierstift 28 zur Zentrierung der Lochscheibe 25 angeordnet ist.

Das Gehäuse 3 des Steckerstückes 1 ist mit einer zentralen Gewindebohrung 29 versehen, in der sich ein Spannbolzen 30 zur Verspannung des Gehäuses 35 befindet und welcher mit einem aus dem Gehäuse des Steckerstückes 1 reichenden Einfädel- und Zentrierstift 31 versehen ist. Im gekoppelten Zustand erstreckt sich der Zentrierstift 31 des Steckerstückes 1 in die Bohrung 42 des Dosenstückes 2, wodurch der Einfädelvorgang und die Zentrierung gesichert sind.

Um dies zu erreichen, ragt der Zentrierstift 31 länger aus dem Gehäuse 3 des Steckerstückes 1 als die im folgenden beschriebenen Kodierstifte 32, welche der richtigen radialen Zuordnung dienen.

Zur Sicherstellung der radialen Zuordnung des Steckerstückes zum Dosenstück weisen die Frontseiten der Gehäuse 3 und 4 des Dosen- und des Steckerstückes 1 und 2 radial wirkende Kodierstifte 32 auf, welche beim Kuppelvorgang in definierte Kodierbohrungen 33 eingreifen.

Das Steckerstück 1 ist ferner mit einer drehbar gelagerten Verschraubungshülse 27 mit Innengewinde versehen und die Außenseite des Gehäuses 4 des Dosenstückes 2 ist mit einem in das genannte Innengewinde der Verschraubungshülse 27 greifenden Gewinde versehen.

Die drehbar gelagerte Verschraubungshülse 27 weist ferner an ihrem Umfang radial gerichtete Flügel zur besseren Handhabung auf.

Wie aus der Figur 3 hervorgeht, preßt die obere Stirnfläche bzw. die Außenkante der Dichtschulter 10 bzw. 10' im geschlossenen Ventilzustand gegen den aus einem elastomeren Werkstoff bestehenden Dichtring 12 bzw. 12'. Stromabwärts zur Dichtring 12 bzw. 12' bildet der Ventilkörper 10 bzw. 10' mit einem Ringsteg der Dichtbuchse 13 bzw. 13' eine in Form einer Drosselstrecke ausgebildete Dichtung.

Wird der Ventilkörper 10 mit Hilfe des Ausgangsnippels 17 des fliegenden Kolbens 16 aufgestoßen, so hebt der Dichtring 12 von der Dichtschulter 11 des Ventilkörpers 10 ab, während die als Drosselstrecke ausgebildete Dichtung ihre Dichtfunktion weiterhin aufrechterhält, bis der Ringsteg der Dichtbuchse 13 den kegelförmigen oberen Teil des Ventilkörpers 10 verläßt. In entsprechender Weise wirkt der Eingangsnippel 18 des fliegenden Kolbens 16 auf den Ventilkörper 10' ein.

Die Vermeidung einer Strömung oder Reduzierung der Geschwindigkeit des an der Strömungskanaldichtung 22 vorbeiströmenden Mediums bewirkt, daß eine Auswaschung oder Kavitation dieser Dichtung verhindert wird. Damit wird erreicht, daß das gesamte Dichtungssystem bei äußerst hohen Drücken und auch für Gase anwendbar ist, wobei durch die Zuordnung und Ausbildung der verschiedenen Dichtungen eine äußerst lange Lebensdauer sichergestellt wird.

Zur weiteren Veranschaulichung der Erfindung dienen die Schnittzeichnungen nach den Figuren 4 und 5 mit den Schnitten C–D und E–F aus Figur 2.

Mit der Erfindung ist nunmehr die Möglichkeit gegeben, eine Vielzahl von Meß-, Steuer- oder Regelleitungen eines fluidischen Systems über eine mit einer Steckkupplung versehene Gruppe von Leitungen einer integral mit der Steckkupplung verbundenen Druckmeßvorrichtung oder bzw. und einer sich anschließenden weiteren Meß-, Steuer- oder Regelvorrichtung zuzuführen, um dort die aufgenommenen Meß- oder Steuerwerte zentral verarbeiten zu können. Mit einem einzigen von Hand ausführbaren Kuppelvorgang können mit der Erfindung alle Fluid-Meßstellen des Systems in richtiger Zuordnung mit ihren Meßgeräten gleichzeitig und unter dem herrschenden Betriebsdruck verbunden werden. Das System muß daher für die Messung bzw. für den Anschluß der Meßgeräte nicht abgeschaltet werden, sondern die Messung kann unmittelbar nach dem Kuppelvorgang der Mehrfachschnellkupplung erfolgen. Eine Verwechselung eines Anschlusses mit einem zugeordneten Meß- oder Steuergerät ist ausgeschlossen, so daß keine Fehlmessungen oder sogar Zerstörungen der Geräte auftreten können.

**Patentansprüche**

1. Vielfach-Meßvorrichtung zur gleichzeitigen Erfassung und Messung von verschiedensten Drücken fluidischer Systeme mit einer unter Betriebsdruck von Hand betätigbaren Mehrfachschnellkupplung mit Strecker- und Dosenstück, wobei

a: eines der Stücke als Meßvorrichtung mit einer Vielzahl von Sensoren (36) ausgebildet ist, das einerseits mit Meß-, Steuer- und Regelleitungen verbindbar ist und welches andererseits mit Meß-, Steuer- und Regelpunkten des fluidischen Systems verbunden ist, --

b: das Dosen- als auch das Steckerstück ein Gehäuse (3, 4) mit mehreren achsparallelen Bohrungen (5, 6) aufweist und federbelastete und mechanische Rückschlagventile (9, 9') vorgesehen sind, deren Ventilkörper (10, 10') mit der Außenkante und/oder Stirnfläche ihrer Dichtschultern (11, 11') im geschlossenen Ventilzustand einen Strömungskanal abdichten,

c: Bohrungen (5, 6) der Gehäuse (3, 4) jeweils eine Kupplungsbuchse (7, 7') mit Radialspiel aufgenommen ist,

d: in jeder Kupplungsbuchse (7, 7') eines der Rückschlagventile (9, 9') mit zylindrischen Ventilkörpern (10, 10') gegen einen Dichtring (12, 12') preßbar angeordnet ist,

e: jedes Rückschlagventil (9, 9') des Steckerstückes (1) einen gefesselten fliegenden Kolben (16) aufweist, dessen Ausgangsnippel (17) zum Aufstoßen des zylindrischen Ventilkörpers (10) des ihm zugeordneten Rückschlagventils (9) des Dosenstückes (2) und dessen Eingangsnippel (18) zum Aufstoßen des Ventilkörpers (10') seines Rückschlagventils (9') des Steckerstückes (1) ausgebildet ist, und

f: in jedem Rückschlagventil (9, 9') des Dosen- und des Steckerstückes stromabwärts zum insbesondere aus elastomerem Werkstoff bestehenden Dichtring (12, 12') eine weitere Strömungskanal-Dichtung (22, 22') angeordnet ist, welche beim Aufstoßen des zylindrischen Ventilkörpers (10, 10') durch den Eingangs- oder Ausgangsnippel (18; 17) des jeweiligen fliegenden Kolbens (16) beim Kuppelvorgang ihre Dichtfunktion erst nach dem Abheben des Dichtringes (12, 12') von der Dichtschulter (11, 11') verzögert beendet.

2. Vielfach-Meßvorrichtung nach Anspruch 1, dadurch gekennzeichnet, daß die Meßvorrichtung (34) ein mit einer Vielzahl von Bohrungen versehenes Gehäuse (35) zur Aufnahme jeweils eines Drucksensors (36) aufweist, wobei jede Bohrung mit einem Fluid-Kanal (37) und einem Entlüftungskanal (38) verbunden ist und der Fluid-Kanal (37) zu einer Kupplungsbuchse (7) des Dosen- oder Steckerstückes (2; 1) führt.

3. Vielfach-Meßvorrichtung nach Anspruch 1 oder 2, dadurch gekennzeichnet, daß jeder Drucksensor (36) mit dem Gehäuse (35) eine abgedichtete Drucksensorkammer (39) kleinen Volumens bildet.

4. Vielfach-Meßvorrichtung nach Anspruch 1 oder einem der voranstehenden Ansprüche, dadurch gekennzeichnet, daß die Drucksensorkammer (39) eine Entlüftungsvorrichtung aufweist, welche eine Entlüftungsschraube (40) besitzt, die am Ausgang ihres Entlüftungskanals (38) angeordnet ist, welche mit der Drucksensorkammer (39) des Drucksensors (36) fluidisch in Verbindung steht.

5. Vielfach-Meßvorrichtung nach Anspruch 1 oder einem der voranstehenden Ansprüche, dadurch gekennzeichnet, daß der Drucksensor (36) elektrische Anschlüsse aufweist, die außen zu einer Schaltleiste führen.

6. Vielfach-Meßvorrichtung nach Anspruch 1 oder einem der voranstehenden Ansprüche, dadurch gekennzeichnet, daß der fliegende Kolben (16) einen äußeren Anschlagbund (19) zur Begrenzung seiner Eindringtiefe in das ihm zugeordnete mechanisch betätigbare Rückschlagventil (9) des Dosenstückes (2) und einen inneren Anschlagbund (20) zur Begrenzung der Eindringtiefe in das ihm nachgeordnete mechanisch betätigbare Rückschlagventil (9') des Steckerstückes (1) aufweist, wobei jede Bohrung (6) im Gehäuse des Steckerstückes (1) ausgangsseitig mit einer Hinterdrehung (21) zur Begrenzung der Axialbewegung des fliegenden Kolbens (16) versehen ist.

7. Vielfach-Meßvorrichtung nach Anspruch 1 oder einem der voranstehenden Ansprüche, dadurch gekennzeichnet, daß jede Kupplungsbuchse (7, 7') an ihrer Ausgangsseite einen Sprengring (23) aufweist, welcher gegen einen Bund (24) eines Schlauchnippels anliegt und von einer ein- oder mehrteiligen, durch Verschraubungen verspannten Lochscheibe (25) gehalten ist.

8. Vielfach-Meßvorrichtung nach Anspruch 1 oder einem der voranstehenden Ansprüche, dadurch gekennzeichnet, daß das Gehäuse (4) des Dosenstückes (2) und seine Lochscheibe (25) eine zentral Bohrung (42) aufweisen, in der ein Zentrierstift (28) zur Zentrierung der Lochscheibe (25) angeordnet ist.

9. Vielfach-Meßvorrichtung nach Anspruch 1 oder einem der voranstehenden Ansprüche, dadurch gekennzeichnet, daß das Gehäuse (3) des Steckerstückes (1) eine zentrale Gewindebohrung (29) aufweist, in der sich ein Bolzen (30) befindet und welcher mit einem aus dem Gehäuse des Steckerstückes (1) reichenden Einfädel- und Zentrierstift (31) versehen ist.

10. Vielfach-Meßvorrichtung nach Anspruch 1 oder einem der voranstehenden Ansprüche, dadurch gekennzeichnet, daß die Frontseiten der Gehäuse (3, 4) des Dosen- und des Steckerstücks (2, 1) radial wirkende Kodierstifte (32) aufweisen, welche beim Kuppelvorgang in definierte Kodierbohrungen (33) eingreifen.

11. Vielfach-Meßvorrichtung nach Anspruch 1 oder einem der voranstehenden Ansprüche, dadurch gekennzeichnet, daß der Zentrierstift (31) länger als die Kodierstifte (32) aus dem Gehäuse (3) des Steckerstückes (1) ragt.

## Claims

1. A multiple measuring device for the simultaneous detection and measurement of the most various pressures of fluidic systems, comprising a multiple quick-release coupling with a plug and a socket portion, said coupling being designed to be actuated by hand under operational pressure, wherein

a: one of the portions is formed as a measuring device with a plurality of sensors (36), said measuring device being designed to be connected on the one hand to measuring, open-loop and closed-loop control circuits, and which on the other hand is connected with measuring, open-loop and closed-loop points of the fluidic system,

b: both the socket and the plug portion have a housing (3, 4) with several axially parallel bores (5, 6) and spring-loaded and mechanical non-return valves (9, 9') are provided, the valve bodies (10, 10') of which, together with the external edge and/or face of their sealing shoulders (11, 11') are designed to seal a flow channel in the closed valve condition,

c: each of the bores (5, 6) of the housings (3, 4, accomodate a coupling socket (7, 7') with radial clearance,

d: in each of the coupling sockets (7, 7'), one of the non-return valves (9, 9') is designed to have cylindrical valve bodies (10, 10'), which can be pressed against a sealing ring (12, 12'),

e: each of the non-return valves (9, 9') of the plug portion (1) has a captive flying piston (16), the outlet nipple (17) of which is designed to knock against the cylindrical valve body (10) of the non-return valve (9) of the socket portion (2) allocated thereto, and the inlet nipple (18) of which is designed to knock against the valve body (10, ) of its non-return valve (9') of the plug portion (1), and

f: in each of the non-return valves (9, 9') of the socket and the plug portion, downstream of the sealing ring (12, 12') essentially consisting of an elastomeric material, a further flow channel seal (22, 22') is arranged, which, on knocking against the cylindrical valve body (10, 10') by the inlet or the outlet nipple (18, 17) of the respective flying piston (16) during the coupling procedure, terminates its sealing function with a delay only after the sealing ring (12, 12') has lifted off from the sealing shoulder (11, 11').

2. Multiple measuring device according to Claim 1, characterised in that the measuring device (34) has a housing (35) with a plurality of holes designed to accomodate a pressure sensor (36) each, with each hole being in communication with a fluid channel (37) and an air-bleed duct (38) and the fluid channel (37) leading to a coupling socket (7) of the socket or plug portion (2, 1).

3. Multiple measuring device according to Claim 1 or 2, characterised in that each pressure sensor (36) forms with the housing (35) a sealed pressure sensor chamber (39) having a small volume.

4. Multiple measuring device according to Claim 1 or one of the preceding claims, characterised in that the pressure sensor chamber (39) has an air-bleed device with an air-bleed screw (40) arranged at the outlet of the air-bleed duct (38) thereof, which is in fluid communication with the pressure sensor chamber (39) of the pressure sensor (36).

5. Multiple measuring device according to Claim 1 or one of the preceding claims, characterised in that the pressure sensor (36) has electrical connections leading to a connecting block.

6. Multiple measuring device according to Claim 1 or one of the preceding claims, characterised in that the flying piston (16) has an external stop flange (19) for limiting the penetration depth thereof into the mechanically actuatable non-return valve (9) of the socket portion (2), which is allocated to said external stop flange (19), and an internal stop flange (20) for limiting the penetration depth into the mechanically actuatable non-return valve (9') of the plug portion (1), which is located after said stop flange (20), with each hole (6) in the housing of the plug portion (1) being provided at its outlet with a relieving attachment (21) for limiting the axial movement of the flying piston (16).

7. Multiple measuring device according to Claim 1 or one of the preceding claims, characterised in that each coupling socket (7, 7') has a retaining ring (23) at its outlet, said retaining ring resting against the flange (24) of a hose nipple and being retained by an apertured disc (25) of one or several parts, which is fastened by screws.

8. Multiple measuring device according to Claim 1 or one of the preceding claims, characterised in that the housing (4) of the socket portion (2) and its apertured disc (25) have a central bore, in which a centering pin (28) is provided for centering the apertured disc (25).

9. Multiple measuring device according to Claim 1 or one of the preceding claims, characterised in that the housing (3) of the plug portion (1) has a central threaded bore (29), in which a bolt (30) is located and which is provided with a feeding and centering pin (31) extending beyond the housing of the plug portion (1).

10. Multiple measuring device according to Claim 1 or one of the preceding claims, characterised in that the face sides of the housings (3, 4) of the socket and the plug portions (2, 1) have radially acting coding pins (32), which during the coupling operation engage with defined coding bores (33).

11. Multiple measuring device according to Claim 1 or one of the preceding claims, characterised in that the centering pin (31) projects beyond the housing (3) of the plug portion (1) more than the coding pins (32).

**Revendications**

1. Appareillage de mesure multiple pour la saisie et la mesure simultanée de diverses pressions de systèmes fluidiques à l'aide d'un dispositif d'accouplement rapide multiple, mâle et femelle, actionnables manuellement, en charge, dans lequel:

a: l'une des pièces est configurée en appareil de mesure équipé de multiples capteurs (36), et peut d'une part être accouplée à des conduites de mesure, de commande et de régulation, et est d'autre part reliée à des points de mesure, de commande et de régulation du système fluidique.

b: la partie femelle et la partie mâle forment un boîtier (3, 4) présentant de multiples alésages parallèles à l'axe (5, 6), et sont pourvues de soupapes de retenue (9, 9′) mécaniques et à ressort, dont les corps de soupape (10, 10′) obturent, en position fermée de la soupape, un conduit à fluide, par leurs bords externes et/ou leurs faces frontales (11, 11′).

c: une douille d'accouplement (7, 7′) à jeu radial est reçue dans les alésages (5, 6) du boîtier (3, 4).

d: dans chaque douille d'accouplement (7, 7′), une des soupapes de retenue (9, 9′) à corps de soupape cylindriques (10, 10′) est prévue pour être pressée contre une bague d'étanchéité (12, 12′).

e: chaque soupape de retenue (9, 9′) de la partie mâle (1), présente un piston prisonnier coulissant (16) dont la partie de sortie (17) est conçue pour pousser le corps de soupape cylindrique (10) de la soupape de retenue (9) y associée dans la partie femelle (2), et dont la partie d'entrée (18) est conçue pour pousser le corps de soupape cylindrique (10′) de la soupape de retenue (9′) de la partie mâle (1), et

f: dans chacune des soupapes de retenue (9, 9′) de la partie femelle et de la partie mâle, en aval de la bague d'étanchéité (12, 12′) constituée en particulier en matériau élastomère, est ménagé un autre joint (22, 22′) du conduit d'écoulement, lequel, lors de la levée du corps de soupape cylindrique (10, 10′) par la partie d'entrée ou de sortie (18; 17) du piston mobile (16) correspondant, lors d'une opération d'accouplement, termine de manière différée son rôle d'obturation, seulement après la séparation de la bague d'étanchéité (12, 12′) du siège (11, 11′).

2. Appareillage de mesure multiple selon la revendication 1, caractérisé en ce que le dispositif de mesure (34) présente un boîtier (35) percé d'alésages multiples, logeant à chaque fois un capteur de pression (36), dans lequel chaque alésage communique avec un conduit à fluide (37) et un conduit de purge (38), et le conduit à fluide (37) est relié à une douille d'accouplement (7) de la partie femelle ou de la partie mâle (2; 1).

3. Appareillage de mesure multiple selon la revendication 1 ou 2, caractérisé en ce que chaque capteur de pression (36) forme avec le boîtier (35) une chambre de mesure de pression étanche (39), de volume réduit.

4. Appareillage de mesure multiple selon la revendication 1 ou l'une des revendications précédentes, caractérisé en ce que la chambre du capteur de pression (39) présente un dispositif purgeur muni d'une vis de purge (40), disposée à l'extrémité de son canal de purge (38), qui communique pour le fluide avec la chambre de mesure de pression (39) du capteur de pression (36).

5. Appareillage de mesure multiple selon la revendication 1 ou l'une des revendications précédentes, caractérisé en ce que le capteur de pression (36) présente des connexions électriques qui mènent à l'extérieur, à un bornier.

6. Appareillage de mesure multiple selon la revendication 1 ou l'une des revendications précédentes, caractérisé en ce que le piston coulissant (16) est pourvu d'un collet de butée extérieur (19) pour limiter sa profondeur de pénétration dans la soupape de retenue (9) à commande mécanique qui lui correspond dans la partie femelle (2), et un collet de butée intérieur (20) pour limiter sa profondeur de pénétration dans la soupape de retenue à commande mécanique (9′) qui le suit dans la partie mâle (1), chaque alésage (6) dans le logement de la partie mâle (1) étant pourvu du côté de sortie d'une dépouille (21) pour limiter la course du piston coulissant (16).

7. Appareillage de mesure multiple selon la revendication 1 ou l'une des revendications précédentes, caractérisé en ce que chaque douille d'accouplement (7, 7′) présente à son extrémité de sortie, une bague (23), laquelle s'appuie sur une butée (24) d'un raccord à tubes flexibles, et est maintenue par un disque ajouré (25) en une ou plusieurs parties, luimême fixé par des boulons.

8. Appareillage de mesure multiple selon la revendication 1 ou l'une des revendications précédentes, caractérisé en ce que le boîtier (4) de la partie femelle (2) et son disque ajouré (25) présentent un alésage central (42), dans lequel se trouve un goujon de centrage (28) destiné au centrage du disque ajouré (25).

9. Appareillage de mesure multiple selon la revendication 1 ou l'une des revendications précédentes, caractérisé en ce que le boîtier (3) de la partie mâle (1) présente un alésage central fileté (29) dans lequel se trouve un boulon (30) et qui est pourvu d'une broche centrale (31) d'emboîtement et de centrage qui dépasse le boîtier de la partie mâle (1).

10. Appareillage de mesure multiple selon la revendication 1 ou l'une des revendications précédentes, caractérisé en ce que les faces frontales (3, 4) des parties femelle et mâle (2, 1) du boîtier, présentent des goujons de codage (32) à fonction radiale qui, lors du processus d'accouplement, s'engagent dans des trous de codage (33) définis.

11. Appareillage de mesure multiple selon la revendication 1 ou l'une des revendications précédentes, caractérisé en ce que la broche de centrage (31) dépasse plus du boîtier (3) de la partie mâle (1), que les goujons de codage (32).

Fig. 1

Fig. 2
Schnitt A-B

# Fig.3
## Einzelheit X

EP 0 233 302 B1

Fig. 4
Schnitt C-D

Fig. 5
Schnitt E-F